(19) Europäisches Patentamt
European Patent Office
Office européen des brevets

(11) **EP 3 593 190 B1**

(12) **EUROPÄISCHE PATENTSCHRIFT**

(45) Veröffentlichungstag und Bekanntmachung des Hinweises auf die Patenterteilung:
**05.05.2021  Patentblatt 2021/18**

(21) Anmeldenummer: **18711238.8**

(22) Anmeldetag: **01.03.2018**

(51) Int Cl.:
**G02B 21/36** *(2006.01)*    **G02B 27/00** *(2006.01)*

(86) Internationale Anmeldenummer:
**PCT/EP2018/055053**

(87) Internationale Veröffentlichungsnummer:
**WO 2018/162319 (13.09.2018 Gazette 2018/37)**

(54) **3D-MIKROSKOPIE**

3D MICROSCOPY

MICROSCOPIE 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2017   DE 102017105103**

(43) Veröffentlichungstag der Anmeldung:
**15.01.2020   Patentblatt 2020/03**

(73) Patentinhaber: **Carl Zeiss Microscopy GmbH 07745 Jena (DE)**

(72) Erfinder:
• **KLEPPE, Ingo 07749 Jena (DE)**
• **WALD, Matthias 07751 Jena (DE)**

(74) Vertreter: **Patentanwälte Geyer, Fehners & Partner mbB Perhamerstrasse 31 80687 München (DE)**

(56) Entgegenhaltungen:
**US-A1- 2014 263 963     US-A1- 2016 062 100 US-A1- 2016 091 706**

EP 3 593 190 B1

**Beschreibung**

Die Erfindung bezieht sich auf ein Verfahren gemäß dem Anspruch 1 zur dreidimensionalen Abbildung eines Objektes, wobei das Objekt durch einen Abbildungsstrahlengang in ein erstes Bild abgebildet wird, das in einer ersten Bildebene liegt, in der ersten Bildebene ein erstes Mikrolinsenarray angeordnet wird, nach dem ersten Mikrolinsenarray eine Intensitätsverteilung erfasst und daraus Bilddaten gewonnen und aus diesen ein tiefenaufgelöstes Bild des Objektes erzeugt wird.

Die Erfindung bezieht sich weiter auf eine Kamera gemäß dem Anspruch 7 zur dreidimensionalen Objekt-Abbildung mit einem Mikroskop, das das Objekt in ein erstes Bild, das in einer ersten Bildebene liegt, abbildet, wobei die Kamera aufweist ein erstes Mikrolinsenarray zur Anordnung in der ersten Bildebene des Mikroskops oder in einer mittel Zwischenoptik daraus abgeleiteten weiteren Bildebene, einen dem ersten Mikrolinsenarray nachgeordneten Detektor, der Bilddaten erzeugt, und eine Steuereinrichtung zur Erzeugung eines elektronischen, tiefenaufgelösten Bildes des Objektes aus den Bilddaten.

Im Stand der Technik sind verschiedene Ansätze bekannt, um mittels Mikroskopie eine Tiefenauflösung zu erreichen und damit eine 3D-Mikroskopie zu schaffen. Die Veröffentlichung M. Broxton et al., Optics Express, Vol. 21, Nr. 21, S. 25418-25439, schlägt hierfür die sog. Lichtfeldmikroskopie vor. Bei diesem Mikroskopieverfahren wird zur dreidimensionalen Abbildung eines Objektes in einer Bildebene des Mikroskops oder in einer mittels Zwischenoptik daraus abgeleiteten weiteren Bildebene ein Mikrolinsenarray angeordnet, das die Strahlung auf einen Detektor leitet. Das Design ist dabei so gewählt, dass die Bildfelder der einzelnen Linsen des Mikrolinsenarrays die Ebene, in der der Detektor liegt, vollständig ausfüllen. Eine entsprechende Bildverarbeitung des Lichtfeldes, welches der Detektor erfasst, liefert eine Abbildung mit eine größerer Tiefenschärfe und ermöglicht Schnitte aus verschiedenen Tiefenlagen des Objektes. Dies realisiert eine 3D-Mikroskopie. Die Lichtfeldmikroskopie reduziert jedoch die laterale Auflösung auf den Durchmesser eines einzelnen Linsenelementes des Mikrolinsenarrays, das in der Bildebene sitzt. Die Veröffentlichung N. Cohen, et al., Optics Express, Vol. 22, Nr. 20, S. 24817-24839, verbessert die lateralen Auflösung der Lichtfeldmikroskopie, indem in der rückseitigen Fokalebene des Objektives eine erste Phasenmaske und direkt auf den Mikrolinsenarray eine zweite Phasenmaske vorgesehen werden, und die rechnerische Auswertung der Bilddaten an diese Änderung angepasst wird.

Die US 7433042 B1 beschreibt die Verwendung eines Mikrolinsenarrays, das als Tubuslinse eines Mikroskops eingesetzt wird und dem unmittelbar eine farbfilternde Maske nachgeordnet ist, die für jede Linse des Mikrolinsenarrays mehrere Farbfilterbereiche vorsieht. Auf diese Weise kann eine Farbinformation des mikroskopierten Bildes gewonnen werden.

Die Veröffentlichung R. Berlich, et al., Optics Express, Vol. 24, Nr. 6, S. 5946-5960, befasst sich mit der dreidimensionalen Auflösung eines Objektes durch Manipulation der Punktbildverwaschungsfunktion.

Die Veröffentlichung N. Hagen und M. Kudenov, Optical Engineering, Vol. 52, Nr. 9, September 2013, S. 090901-1-090901-23 erläutert verschiedene Möglichkeiten, aus einer einzigen Mikroskopieaufnahme Farbinformation zu extrahieren.

Die US 2014/0263963 A1 beschreibt eine Volumenabbildung mit verzerrten ("aliased") Ansichten. Die US 2016/0091706 A1 befasst sich mit der Synthese von Lichtfeldern in der Mikroskopie und die US 2016/0062100 A1 betrifft die Lichtfeldmikroskopie mit Phasenmaskierung.

Weiter sind tiefenauflösende Verfahren bekannt, die nicht simultan arbeiten, also eine Vielzahl von Aufnahmen benötigen. Ein Beispiel hierfür ist die sog. Lichtblattmikroskopie oder die Laser-Scanning-Mikroskopie mit konfokaler Abrasterung der Probe. Diese Verfahren haben aufgrund der Tatsache, dass sie mehrere Aufnahmen benötigen, einen erheblichen Geschwindigkeitsnachteil. Die erläuterten Lichtfeldverfahren hingegen leiden unter lateraler Auflösung durch Reduktion der effektiven numerischen Apertur in der Pupille.

Der Erfindung liegt deshalb die Aufgabe zugrunde, ein dreidimensionales Mikroskopieverfahren derart weiterzubilden, dass aus einer einzigen Abbildung der Probe dreidimensionale Information mit möglichst geringem lateralen Auflösungsverlust und möglichst einfachem optischen Aufbau gewonnen werden kann.

Die Erfindung ist in den Ansprüchen 1, betreffend ein Mikroskopieverfahren, und 6, betreffend eine Kamera zur dreidimensionalen Objekt-Abbildung mit einem Mikroskop, definiert. Die Erfindung umfasst weiter ein Mikroskop mit einer solchen Kamera.

Im Mikroskopieverfahren wird zur dreidimensionalen Abbildung eines Objektes das Objekt durch einen Abbildungsstrahlengang in eine erste Bildebene abgebildet. In der ersten Bildebene wird ein erstes Mikrolinsenarray angeordnet. Nach dem ersten Mikrolinsenarray wird eine Intensitätsverteilung erfasst. Daraus werden Bilddaten gewonnen, mittels denen ein tiefenaufgelöstes Bild des Objektes erzeugt wird. Insofern entspricht das Mikroskopieverfahren der Lichtfeldmikroskopie. Zusätzlich wird nun jedoch dem ersten Mikrolinsenarray ein zweites Mikrolinsenarray nachgeordnet. Beide Mikrolinsenarrays haben dieselbe Teilung. Sie erzeugen zusammen in einer zweiten Bildebene eine lateral segmentierte Version des ersten Bildes. Dieses zweite Bild hat mehrere Segmente. Jedes Segment ist von den benachbarten Segmenten beabstandet. Die beiden Mikrolinsenarrays schaffen somit Segmente, die voneinander durch Lücken beabstandet sind. Dieses segmentierte Bild liegt jedoch so nicht vor, denn der durch die Lücken geschaffene Raum wird für eine Phasenmanipulation genutzt, die für jedes Segment im zweiten Bild einen Spot erzeugt, der durch die Phasenmanipulation gemäß einer von der Tiefenlage im Objekt abhängigen Punktbildverwaschungsfunktion strukturiert ist. Die Phasenmanipulation ist so gestaltet, dass Form und/oder Struktur des Spots eine Tiefenlage des zugeordneten Punktes im Objekt kodiert. Die derart erzeugten Spots stellen gegenüber den ursprünglichen Segmenten eine Vergrößerung dar, die durch die geschaffenen Lücken möglich ist. Die Spots überdecken die Lücken mindestens teilweise. Die Intensitätsverteilung wird in der zweiten Bildebene erfasst, wobei Form und/oder Struktur des Spots für jedes Segment aufgelöst wird. Für jedes Segment wird in einer Bildverarbeitung aus der Form und/oder Struktur des Spots die laterale Intensitätsverteilung des ursprünglichen Segmentes (also vor der Phasenmanipulation) und zusätzlich eine Angabe über die Tiefenstruktur am jeweiligen Objektpunkt ermittelt. Daraus wird das tiefenaufgelöste Bild des Objektes erzeugt.

Die beiden Mikrolinsenarrays segmentieren das erste Bild lateral und sorgen dafür, dass im zweiten Bild die Segmente durch Lücken getrennt sind. Die Lücken werden für die nachfolgende Phasenmanipulation ausgenutzt, die aufgrund der tiefenabhängig manipulierten Punktbildverwaschungsfunktion die Segmente in Spots aufweitet, welche größer sind als die ursprünglichen Segmente. Form und/oder Struktur der Spots hängt von der Tiefenlage rückstreuender oder strahlungsemittierender (z. B. fluoreszierender) Elemente des Objekts im jeweiligen Segment ab. Durch die Lücken bleiben die aufgeweiteten Spots ausreichend voneinander beabstandet und können in einer nachfolgenden Auswertung der Intensitätsverteilung, welche Form und/oder Struktur der Spots auflöst, sowohl hinsichtlich der lateralen Intensitätsverteilung in jeweiligen Spots als auch hinsichtlich einer Tiefenstruktur ausgewertet werden. Da die Segmente weiterhin laterale Ortsinformation tragen, bewahrt das Mikroskopieverfahren bzw. die Kamera anders als in der Lichtfeldmikroskopie die laterale Ortsinformation des ersten Bildes und beschränkt diese nicht zwingend auf die Teilung des ersten Mikrolinsenarrays. Somit ist die laterale Auflösung nicht in dem Maß auf Kosten der Tiefenauflösung kompromittiert, wie dies bei der Lichtfeldmikroskopie der Fall ist.

Für die Anordnung der zwei Mikrolinsenarrays gibt es mehrere Möglichkeiten. In Ausführungsformen sind die zwei Mikrolinsenarrays so ausgebildet, dass ein telezentrisches Zwischenbild erhalten wird, aus dem dann eine Relaisoptik eine Pupillenebene generiert, in welcher die Phasenmanipulation ausgeführt werden kann. Die beiden Mikrolinsenarrays befinden sich dann in einem Abstand, der der Summe der Brennweiten der beiden Arrays entspricht. In anderen Ausführungsformen wird eine nichttelezentrische Zwischenbildebene erzeugt. Dann kann auf die Relaisoptik zur Erzeugung einer weiteren Pupille verzichtet werden. Der phasenmanipulierende Pupilleneingriff erfolgt direkt am zweiten Mikrolinsenarray. Es befindet sich in der Brennebene des ersten Mikrolinsenarrays.

Um die Segmentierung zu erleichtern, ist es zu bevorzugen, wenn das erste Bild gegenüber dem üblichen Mikroskopbild durch eine nachvergrößernde Optik aufgeweitet ist.

Die Phasenmanipulation kann für den gesamten Querschnitt des Strahlengangs ausgelegt sein. Dann wird ein einziges phasenmanipulierendes Element (z. B. eine Phasenmaske oder spatial light modulator) in den Strahlengang, z.B. die Pupillenebene, gestellt. Der Strahlengang kann daher reflektiv oder transmittiert bezüglich des Elementes ausgeführt werden. Alternativ ist es möglich, die Phasenmanipulation so auszuführen, dass für einzelne Segmente individuelle Phasenmaskenelemente vorgesehen sind. Diese Bauweise bietet sich insbesondere für die Ausführungsform mit nichttelezentrischem Zwischenbild an, bei dem die Phasenmanipulation am zweiten Mikrolinsenarray ausgeführt wird. Das zweite Mikrolinsenarray hat dann nicht nur eine Vielzahl aus Minilinsen, die jeweils eine abbildende Wirkung haben, sondern mit den Minilinsen sind zugleich phasenmanipulierende Elemente kombiniert, beispielsweise Phasenmaskenelemente.

Um ein Übersprechen zwischen den Abbildungen der einzelnen Mikrolinsen zu minimieren, wird bevorzugt ein Zusammenhang zwischen Brennweite f und Teilung (Abstand) der Mikrolinsen des ersten Mikrolinsenarray eingehalten, der der Beziehung

$$(f/p) = \alpha / (2 \, NA)$$

genügt. Dabei ist p der Abstand der Mikrolinsenzentren. $\alpha$ ist die Fläche des Strahlbündelquerschnitts im Verhältnis zur Fläche der Mikrolinse; nimmt bei kompletter Ausleuchtung der Mikrolinse also den Wert 1 an. NA ist die numerische Apertur im Zwischenbild, für das die Kamera ausgelegt ist.

Die Kamera zur dreidimensionalen Objekt-Abbildung kann an einem herkömmlichen Weitfeldmikroskop eingesetzt werden. Es muss lediglich das erste Mikrolinsenarray in die Bildebene des Mikroskops gesetzt werden. Wo dies baulich nicht möglich ist, beispielsweise weil ein Mikroskopflansch keine ausreichende Zugang oder Raum gibt, kann die Kamera eine Zwischenoptik aufweisen, welche das erste Bild in der ersten Bildebene in eine weitere Bildebene umsetzt, in der dann das Mikrolinsenarray liegt. Dieses Vorgehen ist aus der genannten Arbeit von M. Broxton et al. bekannt.

Die nachrüstbare Kamera verleiht einer Abbildungsvorrichtung, z. B. einer Funduskamera oder einem Mikroskop, das bislang keine besondere dreidimensionale Objekt-Abbildung erlaubte, eine entsprechende 3D-Fähigkeit.

Die Erfindung wird nachfolgend unter Bezugnahme auf die Zeichnung beispielhalber noch näher erläutert. In der Zeichnung zeigt:

| | |
|---|---|
| Fig. 1 | eine Schemadarstellung eines Mikroskops mit einer Kamera zur 3D-Mikroskopie, |
| Fig. 2 | eine schematische Darstellung des Strahlengangs im Mikroskop mit Kamera |
| Fig. 3 | die Abfolge verschiedener Bilder, die im Mikroskop gemäß Fig. 1 bzw. Strahlengang gemäß Fig. 2 entstehen, |
| Fig. 4 und 5 | mögliche Varianten für die Anordnung eines Mikrolinsenarraypaares in der Kamera der Figuren 2 bzw. 1, |
| Fig. 6 | eine Darstellung einer Phasenmaske, und |
| Fig. 7 | Darstellungen der Wirkung dieser Phasenmaske. |

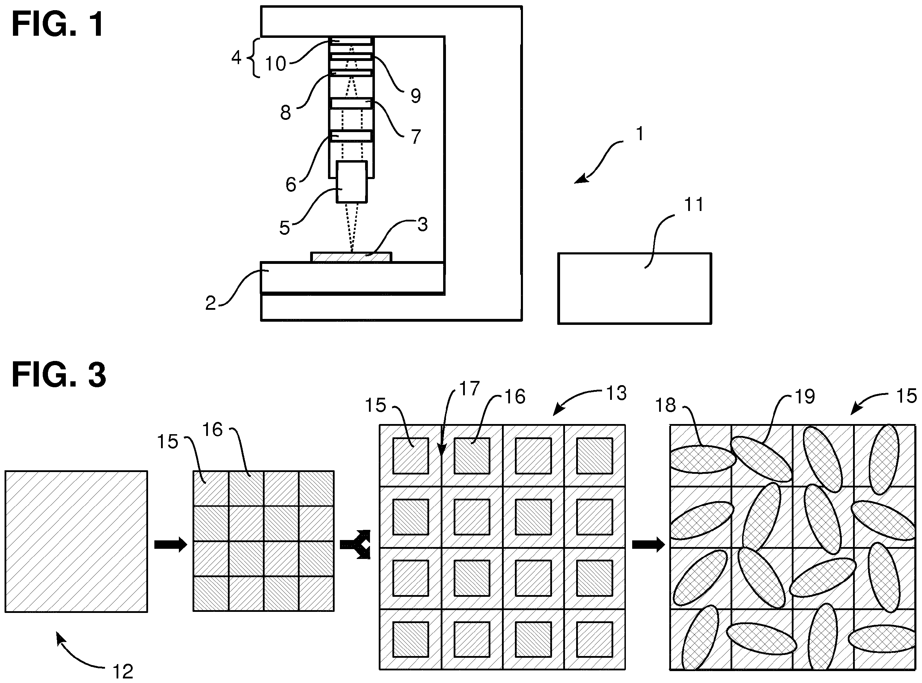

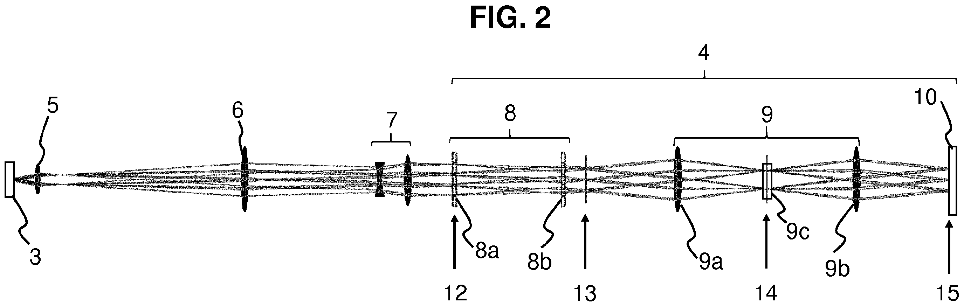

Figur 1 zeigt schematisch ein Mikroskop 1 zur dreidimensionalen Mikroskopie. Figur 2 zeigt schematisch den zugehörigen Strahlengang des Mikroskops 1. Das Mikroskop 1 ist exemplarisch zur Weitfeldmikroskopie eingerichtet und umfasst einen Probentisch 2, auf dem sich das zu mikroskopierende Objekt 3 befindet. Beim Mikroskop 1 handelt es sich um ein herkömmliches Weitfeldmikroskop; es ist allerdings um eine Kamera ergänzt, deren optische Elemente in den Figuren 1 und 2 mit dem Bezugszeichen 4 versehen sind. Zusätzlich zu diesen optischen Elementen umfasst die Kamera 4 noch ein Steuergerät 11, das als eigenständiges Steuergerät ausgebildet sein kann, oder durch eine spezielle Funktion eines Steuergerätes realisiert sein kann, das bereits ohnehin im Mikroskop 1 für andere Zwecke vorgesehen ist. Das Steuergerät 11 kann insbesondere als Softwaremodul für einen üblichen Computer ausgebildet sein. Es empfängt über eine Leitung Bilddaten und verarbeitet diese.

Das Mikroskop 1 bildet das Objekt 3 über ein Objektiv 5 und eine Tubuslinse 6, die als herkömmliche Feldlinse fungiert, ab. Nachgeordnet der Tubuslinse 6 ist in dieser Ausführungsform eine Vergrößerungsoptik 7, die jedoch optional ist. Objektiv 5 und Tubuslinse 6 erzeugen ein Weitfeldbild 12 in einer Bildebene, die aufgrund der nachgeordneten Kamera 4 nur eine Zwischenbildebene ist. Das Bild 12 in der Zwischenbildebene wird von einem Mikrolinsenarraypaar 8, umfassend ein erstes Mikrolinsenarray 8a und ein zweites Mikrolinsenarray 8b, aufgenommen. Die beiden Mikrolinsenarrays 8a, 8b haben die gleiche Teilung. Das erste Mikrolinsenarray 8a ist in der Zwischenbildebene angeordnet. Da im Strahlengang der Figur 2 noch weitere Zwischenbildebenen bzw. Bildebenen folgen, wird die Bildebene, welche von Objektiv 5, Tubuslinse 6 und Vergrößerungsoptik 7 bereitgestellt wird, hier als erste Bildebene oder erste Zwischenbildebene bezeichnet.

Die Vergrößerungsoptik 7 hat die Wirkung, dass das Bild in der ersten Zwischenbildebene gegenüber der Größe, die von Objektiv 5 und Tubuslinse 6 bereitgestellt werden würde, aufgeweitet ist. Diese Aufweitung schafft keine zusätzliche Bildinformation, erleichtert aber die des nachfolgenden Mikrolinsenarraypaars 8.

Das Mikrolinsenarraypaar 8 unterteilt das erste Bild 12 in Segmente. Die Art der Segmentierung wird nachfolgend anhand der Figur 3 noch näher erläutert. Das segmentierte Bild 13b findet sich in einer zweiten Zwischenbildebene und wird von dort mittels einer Phasenmanipulationseinrichtung 9 in ein finales Bild 15 auf einen Detektor 10 abgebildet. Die Phasenmanipulationseinrichtung 9 umfasst eine Relaisoptik 9a, 9b, welche die zweite Zwischenbildebene in eine finale Bildebene überträgt, in welcher das finale Bild 15 der Detektor 10 liegen, wobei eine zwischengeschaltete Pupillenebene 14 entsteht, in der eine Phasenmaske 9c angeordnet ist.

Figur 2 zeigt die Abfolge der entsprechenden Bildebenen. Figur 3 zeigt die zugeordneten Bilder. In der ersten Zwischenbildebene entsteht das erste Bild 12, das aufgrund der nachfolgenden Optik nur ein erstes Zwischenbild ist. Das Mikrolinsenarraypaar 8 teilt das erste Zwischenbild 12 in einzelne Segmente 15, 16 ein, wobei die Einteilung durch die Teilung der Mikrolinsenarrays 8a, 8b vorgegeben ist. Gleichzeitig wird das erste Zwischenbild 12 vom Mikrolinsenarraypaar 8 so aufgeweitet, dass die einzelnen Segmente von den benachbarten Segmenten beabstandet sind. Figur 3 zeigt zur Veranschaulichung die Segmentierungsabfolge. Links ist das erste Bild 12. Das nächste Bild ist in Realität nicht vorhanden und soll nur die segmentierende Wirkung im ersten Bild 12 zeigen. Dann folgt das vom Mikrolinsenarraypaar tatsächlich erzeugte zweite Zwischenbild 13, in dem zwischen den Segmenten 15, 16, die im ersten Zwischenbild 12 nahtlos aneinander lagen nun eine Lücke 17 besteht. Dies gilt für alle Segmente, in die das erste Zwischenbild 12 aufgeteilt wurde.

Die Lücken 17 bieten Platz für die nachfolgende Phasenmanipulation mittels der Phasenmanipulationseinrichtung 9. Sie nimmt über ihre Relaisoptik 9a, 9b das zweite Zwischenbild 13 auf und bildet es in das finale Bild 15 auf den Detektor 10 ab, wobei in einer zwischengeordneten Pupillenebene 14 eine Phasenmanipulation durch eine Phasenmaske 9c erfolgt. Die Phasenmanipulation durch die Phasenmaske 9c unterwirft jedes Segment 15, 16 einer Punktbildverwaschungsfunktion, die von der Tiefenlage im Objekt 3 abhängt. Somit entsteht aus jedem Segment 15, 16 ein entsprechender Spot 18, 19. Er ist gegenüber dem ursprünglichen Segment 15, 16 aufgeweitet, belegt also eine größere Fläche im endgültigen Bild 15. Aufgrund der Lücken 17, die durch das Mikrolinsenarraypaar 8 im zweiten Zwischenbild 13 geschaffen wurden, besteht jedoch Platz für die Aufweitung der Segmente 15, 16 in die Spots 18, 19.

Um ein Übersprechen zwischen den Abbildungen der einzelnen Mikrolinsen zu minimieren, wird bevorzugt ein Zusammenhang zwischen Brennweite f und Abstand der Zentren der Mikrolinsen (nachfolgend als Teilung bezeichnet) des ersten Mikrolinsenarray eingehalten, der der Beziehung

$$(f/p) = α / (2\ NA) \tag{1}$$

genügt. Dabei ist p der Abstand der Mikrolinsenzentren. $α$ ist die Fläche des Strahlbündelquerschnitts im Verhältnis zur Fläche der Mikrolinse; nimmt bei kompletter Ausleuchtung der Mikrolinse also den Wert 1 an. NA ist die numerische Apertur im Zwischenbild 12, für das die Kamera 4 ausgelegt ist.

Diesem Zusammenhang liegt folgende, den Erfindern zuzuschreibenden Erkenntnis zu Grunde: Durch den Ausleuchtungsparameter $α$ lässt sich die Bedingung, dass möglichst kein Übersprechen der Abbildungen zwischen den Mikrolinsen auftreten soll, durch die Forderung a<1 ausdrücken. Definiert man ein relative Größe k, die beschreibt, wie groß das Bildfeld einer einzelnen Mikrolinse relativ zur Größe eines Airyscheibchens ist (k:=p/Airydurchmesser), lässt sich über eine Mindestgröße für k ein Zustand vorschreiben, bei dem keine Phaseninformation zur anschließenden Strahlformung durch Beugung und damit Verteilung über weitere Mikrolinsen verloren geht. Wäre k beispielsweise deutlich kleiner als 1 Airy, wäre die Phaseninformation zur Strahlformung in einem Kanal nicht mehr komplett vorhanden. Daraus folgt, dass k mindestens größer als 1 Airy, aber besser auch größer 2 Airy sein muss, um genügend z-Information in jeder Mikrolinsenabbildung zu transportieren. Dann ist die Bildinformation besonders gut kodierbar. Aus beiden Bedingungen ergibt sich eine optionale Einschränkung für die Beschaffenheit der Mikrolinsenarrays, für ihr Verhältnis aus Mikrolinsenabstand (p) zur Brennweite (f):

$$\frac{f}{p^2} = \frac{α}{2{,}44\ λ\ k} \tag{2}$$

gilt. Da die Größe eines Airyscheibchens durch dessen Durchmesser d = 1,22 $λ$ / NA gegeben ist und k = p / d gilt, erhält man aus Gleichung (2) die überraschend übersichtliche, obige Gleichung (1).

Ebenfalls ist ein Brennweitenverhältnis der Mikrolinsenarrays bevorzugt, das eine hinreichende Verkleinerung erzielt, um ausreichend Platz für die Verbreiterung des Lichtbündels durch die z-Kodierung pro Mikrolinse zu schaffen. Das hängt ersichtlich davon ab, wie viele z-Ebenen erfasst werden sollen.

Figur 3 zeigte schematisch eine Aufweitung zu länglichen Spots 18, 19, deren Drehlage von der Tiefe im Objekt 3 abhängt, aus der die Bildinformation für die Segmente 15, 16 stammte. Das finale Bild 15 wird vom Detektor 10 erfasst, dessen Ortsauflösung so gestaltet ist, dass Form und/oder Struktur der Spots 18, 19 aufgelöst wird. Die Steuereinrichtung 11 ermittelt aus den Bilddaten des Detektors 10 dann sowohl eine Information über die Tiefenlage (in Figur 3 exemplarisch durch die Drehlage der länglichen Spots 18, 19 symbolisiert) als auch über die laterale Intensitätsverteilung, die im ursprünglichen Segment 15, 16 vorhanden war. Auf diese Weise wird ein dreidimensional aufgelöstes Bild des Objektes 3, also eine Tiefenangabe ermittelt, ohne dass die laterale Auflösung auf die Teilung des Mikrolinsenarray 8a, 8b herabgesetzt wäre.

Es sei darauf hingewiesen, das in Figur 3 die Segmente 15, 16 lediglich exemplarisch rechteckig eingezeichnet sind. Dies dient der Veranschaulichung. Es sind auch andere Segmentformen möglich, z. B. kreisförmige Segmente. Gleiches gilt für die Spots 18, 19, die ausschließlich zur Veranschaulichung als längliche Spots gezeichnet sind.

Es sind im Stand der Technik verschiedene Phasenmasken bekannt, die eine tiefenabhängige Punktbildverwaschungsfunktion erzeugen. Beispiele für solche Phasenmasken finden sich in der WO 2012/039636 und der DE 102012224306 A1. Beide Veröffentlichungen schildern die Phasenmasken zwar in anderem Zusammenhang, nämlich in Kombination mit der sogenannten Lokalisierungsmikroskopie (beispielsweise PALM-Verfahren), die dort geschilderte Phasenmanipulation ist aber gleichermaßen zur Erzeugung der tiefenabhängigen Punktbildverwaschungsfunktion mit der Kamera 4 geeignet. Der Offenbarungsgehalt dieser Druckschriften wird in dieser Hinsicht hier voll umfänglich eingebunden.

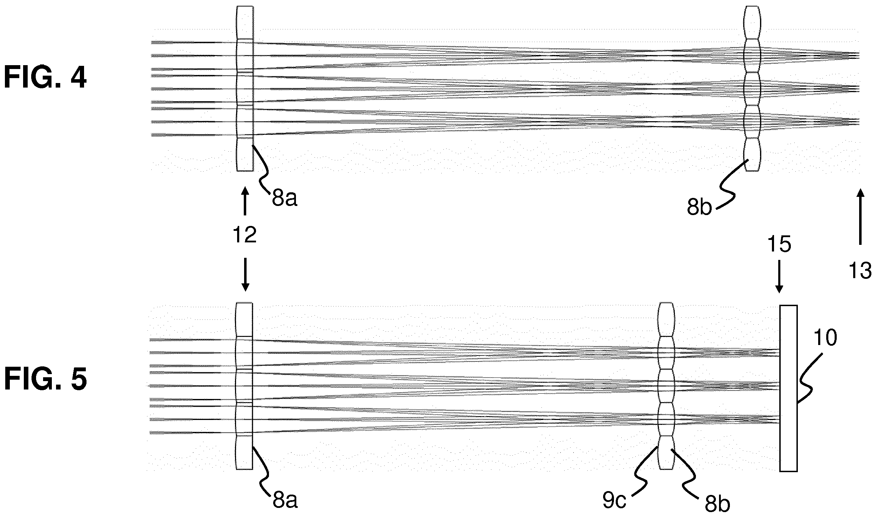

Im Strahlengang der Figur 2 erzeugt das Mikrolinsenarraypaar 8 das zweite Zwischenbild 13, und die Phasenmanipulationseinrichtung 9 setzt dieses unter Erzeugung der zwischengelagerten Pupillenebene 14 in das finale Bild 15 um. Dazu kann, wie Figur 4 zeigt, das Mikrolinsenarraypaar 8 in einer telezentrischen Anordnung ausgestaltet sein, d. h. das erste Mikrolinsenarray 8a und das zweite Mikrolinsenarray 8b sind um die Summe ihrer Brennweiten beabstandet. Es ist jedoch auch eine Ausgestaltung ohne telezentrisches Zwischenbild möglich. Diese Ausführungsform ist in Figur 5 veranschaulicht. Das zweite Mikrolinsenarray 8b befindet sich dann zum ersten Mikrolinsenarray 8a, welches in der ersten Zwischenbildebene des ersten Zwischenbildes 12 sitzt in einem Abstand, welcher der Brennweite der ersten Mikrolinsenarrays 8a entspricht. Dann kann auf die Relaisoptik 9a, 9b verzichtet werden, und die Phasenmanipulation erfolgt direkt am zweiten Mikrolinsenarray 8b. In Figur 5 ist exemplarisch eine auf die Vorderseite des Mikrolinsenarrays 8b aufgetragene, phasenmanipulierender Struktur in Form einer Phasenmaske 9c eingetragen. Natürlich kann die entsprechende Struktur auch innerhalb des zweiten Mikrolinsenarrays 8b angeordnet werden oder auf dessen Rückseite. Gleichermaßen ist es möglich, eine entsprechende Phasenmaske unmittelbar dem zweiten Mikrolinsenarray 8b vor- oder nachzuordnen. Der Vorteil des nicht-telezentrischen Aufbaus ist zum einen seine Kompaktheit, da das finale Bild 15 relativ kurz nach dem zweiten Mikrolinsenarray 8b entsteht und der Detektor 10 dort angeordnet ist. Zum anderen ist das Kanalübersprechen zwischen benachbarten Mikrolinsenarrays sehr gering. Auch entfällt der Justieraufwand für die Relaisoptik 9a, 9b.

Für beide Varianten, d. h. für Figur 4 mit nachgeordneter Relaisoptik 9a, 9b und Figur 5 ohne diese Relaisoptik, kommen verschiedene Varianten für die Phasenmaske in Frage. Hierbei sind zwei grundsätzlich unterschiedliche Ansätze zu unterscheiden. Die Phasenmaske kann über den gesamten Querschnitt des Strahlengangs der Figur 4 eine einheitliche Phasenmanipulation ausführen. Alternativ dazu ist es möglich, ein Array von einzelnen Phasenmaskenelemente vorzusehen, die für einzelne Segmente individuell die Punktbildverwaschungsfunktion tiefenabhängig modifizieren. Für die Bauweise der Figur 4 ist das optional, bei Figur 5 erhält man diese Wirkung automatisch.

Die vom Steuergerät 11 durchgeführte Verarbeitung der Bilddaten kann auf die Algorithmik der eingangs genannten Lichtfeldmikroskopie zugreifen. Wie die z-Information in der Intensitätsverteilung über dem Detektor 10 kodiert ist, hängt letztlich von der gewählten Phasenmaske ab. Es wird deshalb nachfolgend eine generelle Beschreibung der Vorgehensweise zur Verarbeitung der Bilddaten unabhängig von der konkreten Phasenmaske gegeben.

Eine Entfaltung der Bilder erfolgt in Ausführungsformen auf Basis der Punktbildverwaschungsfunktion (PSF), die den einzelnen Pixeln des Detektors 10 zugeordnet ist. Dies ist analog zum Verfahren, wie es von Broxton et al. (Zitat siehe oben) beschrieben wird - mit dem Unterschied, dass die PSF nun pixelindividuell ist. Sie ist in Ausführungsformen vorbekannt und wurde aus der Verteilung der PSF über dem zweiten Mikrolinsenarray 8b ermittelt.

Es genügt in der Regel die Annahme, dass die Verteilung der PSF für alle Mikrolinsen des zweiten Mikrolinsenarrays 8b dieselbe ist, sodass es in Ausführungsformen zur Ermittlung der PSF pro Pixel ausreicht, die Variation der PSF für eine einzelne Mikrolinse zu kennen. Da jeder Mikrolinse eine Pixelgruppe zugeordnet ist, ergibt sich aus der Variation der PSF pro Mikrolinse auf einfache Weise die PSF pro Pixel für jedes Pixel des Detektors 10.

Die PSF für eine einzelne Mikrolinse ist in Ausführungsformen vorbekannt, z.B. aus einer experimentellen Bestimmung, beispielsweise durch Vermessen von beads als Probenkörpern. In anderen Ausführungsformen wird eine analytisch beschreibbare Phasenmaske verwendet. Dann erfolgt eine analytische Herleitung der PSF ähnlich wie in Broxton et al., S. 25427, Gleichung 5 - nun jedoch unter Berücksichtigung auch des zweiten Mikrolinsenarrays 8b. Die PSF für eine Mikrolinse lässt sich zudem in einem wellenoptischen Modell numerisch berechnen. In weiteren Ausführungsformen ist sie aus einer wellenoptischen Simulation des Gesamtaufbaus (einschließlich der Phasenmaske) vorbekannt. Die PSF einer Mikrolinse kann in Ausführungsformen analog zur Lichtfeldmikroskopie diskretisiert werden (vgl. Broxton et al., Abschnitt 3.2) und Rauschen mit modelliert werden.

Die Entfaltung und somit Bildkonstruktion erfolgt in Ausführungsformen unter Verwendung der PSF pro Pixel analog zu Broxton et al. in einem Lucy-Richardson-Formalismus (vgl. Broxton et al., Abschnitt 3.4). Klassische lineare Entfaltungsverfahren kommen aufgrund der Ortsabhängigkeit der PSF hingegen nicht in Betracht.

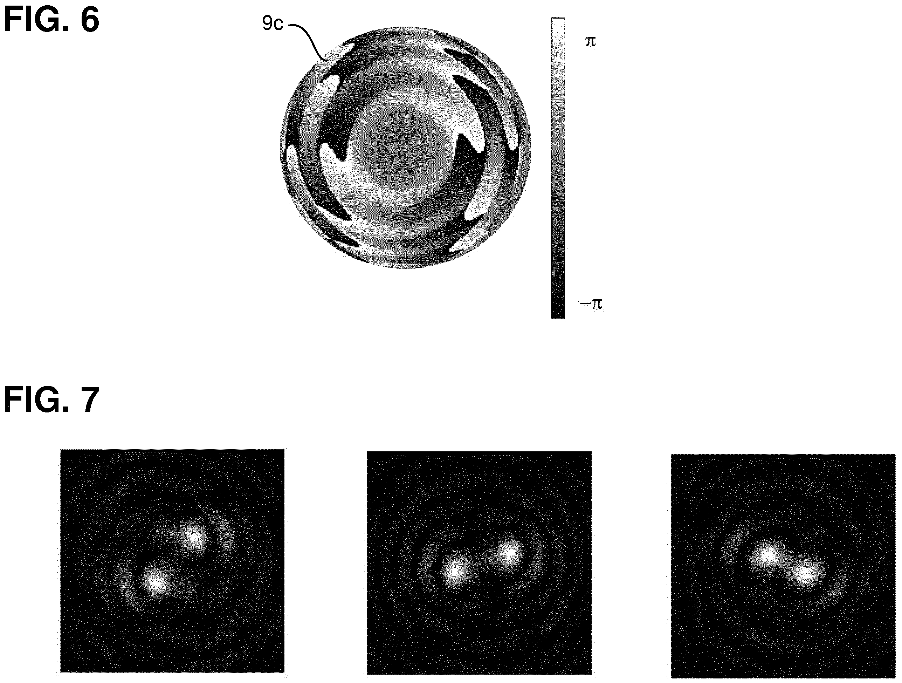

Alternativ ist es in einer vereinfachten Ausführungsform möglich, die einzelnen Pixel des Detektors zu Ebenen im Objekt 3 zuzuordnen, ohne eine Entfaltung vorzunehmen. Figur 6 zeigt eine Draufsicht auf eine Phasenmaske 9c, die beispielsweise im Aufbau der Figur 2 zum Einsatz kommen kann. Sie bewirkt eine spiralförmige Punktbildverwaschungsfunktion. Das Abbild eines Punktes in der Fokalebene wird durch diese Phasenmaske 9c in zwei nebeneinanderliegende Spots aufgeteilt. Als Funktion des Abstands von der Fokalebene rotieren diese Spots um ein gemeinsames Zentrum. Aufgrund der Spiralform der PSF ändert sich dabei der Abstand der Spots auch etwas. Diese Verhältnisse zeigt die Figur 7, welche exemplarisch das Abbild eines Punktes zeigt, der in der Fokalebene liegt (mittlere Darstellung der Figur 7), etwas unterhalb der Fokalebene (linke Darstellung der Figur 7) bzw. etwas oberhalb der Fokalebene angeordnet ist (rechte Darstellung der Figur 7).

**Patentansprüche**

1. Verfahren zur dreidimensionalen Abbildung eines Objektes (3), wobei

    - das Objekt (3) durch einen Abbildungsstrahlengang in ein erstes Bild (12) abgebildet wird, das in einer ersten Bildebene liegt,
    - in der ersten Bildebene ein erstes Mikrolinsenarray (8a) angeordnet wird,
    - nach dem ersten Mikrolinsenarray (8a) eine Intensitätsverteilung erfasst und daraus Bilddaten gewonnen und aus diesen ein tiefenaufgelöstes Bild des Objektes (3) erzeugt wird,

- dem erstem Mikrolinsenarray (8a) ein zweites Mikrolinsenarray (8b) nachgeordnet wird, das dieselbe Teilung wie das erste Mikrolinsenarray (8a) hat,
- mittels erstem und zweitem Mikrolinsenarray (8a, 8b) das erste Bild (12) lateral in Segmente (15, 16) segmentiert und in ein zweites Bild (13) abgebildet wird, in dem die Segmente (15, 16) voneinander beabstandet und durch Lücken (17) getrennt sind und das in einer zweiten Bildebene liegt,
- nach dem ersten Mikrolinsenarray (8a) eine Phasenmanipulation (9c) durchgeführt wird, die für jedes Segment (15, 16) in der zweiten Bildebene gemäß einer Punktbildverwaschungsfunktion einen Spot (18, 19) erzeugt, dessen Form und/oder Struktur die Tiefenlage im Objekt (3) kodiert und die Lücken (17) im zweiten Bild (13) überdeckt und so ein finales Bild abgebildet wird,
- die Intensitätsverteilung für das finale Bild (13) erfasst wird, wobei Form und/oder Struktur der Spots (18, 19) aufgelöst wird, und
- für jedes Segment (15, 16) aus der Form und/oder Struktur der Spots (18, 19) eine laterale Intensitätsverteilung und eine Tiefenangabe ermittelt und daraus das tiefenaufgelöste Bild des Objektes (3) erzeugt wird.

2. Verfahren nach Anspruch 1, **dadurch gekennzeichnet, dass** im Abbildungsstrahlengang mittels einem Objektiv (5) und einer Tubuslinse (6) das Objekt (3) abgebildet wird, wobei mittels einer Nachvergrößerungsoptik (7) zusätzlich das erste Bild (12) aufgeweitet wird.

3. Verfahren nach Anspruch 1 oder 2, **dadurch gekennzeichnet, dass** zweite Mikrolinsenarray (8b) in einem Abstand vom ersten Mikrolinsenarray (8a) angeordnet wird, der der Summe der Brennweiten der beiden Mikrolinsenarrays (8a, 8b) entspricht, und dem zweiten Mikrolinsenarray (8b) eine Relaisoptik (9a, 9b) folgt, die eine Pupillenebene (14) erzeugt, in der die Phasenmanipulation durchgeführt wird.

4. Verfahren nach Anspruch 1 oder 2, **dadurch gekennzeichnet, dass** das zweite Mikrolinsenarray (8b) in einem Abstand vom ersten Mikrolinsenarray (8a) angeordnet wird, der der Brennweite der ersten Mikrolinsenarrays (8a) entspricht, und ein Phasenmanipulationselement (9c) mit dem zweiten Mikrolinsenarray (8b) kombiniert wird.

5. Verfahren nach einem der Ansprüche 1 bis 2, **dadurch gekennzeichnet, dass** die Phasenmanipulation mit einer auf alle Segmente (15, 16) wirkenden Phasenmaske (9c) oder einem Phasenmaskenarray durchgeführt wird, das für einzelne der Segmente (15, 16) individuelle Phasenmaskenelemente aufweist.

6. Mikroskopieverfahren nach einem der obigen Ansprüche, **dadurch gekennzeichnet, dass** ein Zusammenhang zwischen Brennweite f und Abstand p der Zentren der Mikrolinsen des zweiten Mikrolinsenarrays (8b) eingehalten wird, der der Beziehung

$$(f/p) = \alpha / (2\,NA)$$

genügt, wobei $\alpha$ ein Verhältnis zwischen einer Strahlbündelquerschnittfläche an jeder Mikrolinse des zweiten Mikrolinsenarrays (8b) und einer Fläche der Mikrolinse ist und NA eine numerischer Apertur im ersten Bild (12) ist.

7. Kamera zur dreidimensionalen Objekt-Abbildung mit einem Mikroskop (1), das das Objekt (3) in ein erstes Bild (12), das in einer ersten Bildebene liegt, abbildet, wobei die Kamera (4) aufweist

- ein erstes Mikrolinsenarray (8a) zur Anordnung in der ersten Bildebene des Mikroskops (1) oder in einer mittel Zwischenoptik daraus abgeleiteten weiteren Bildebene,
- einen dem ersten Mikrolinsenarray (8a) nachgeordneten Detektor (10), der Bilddaten erzeugt, und
- eine Steuereinrichtung (11) zur Erzeugung eines tiefenaufgelösten Bildes des Objektes (3) aus den Bilddaten, **dadurch gekennzeichnet, dass**
- zwischen dem erstem Mikrolinsenarray (8a) und dem Detektor (10) ein zweites Mikrolinsenarray (8b) angeordnet ist, das dieselbe Teilung wie das erste Mikrolinsenarray (8a) hat,
- erstes und zweites Mikrolinsenarray (8a, 8b) ausgebildet sind, das erste Bild (12) lateral in Segmente (15, 16) zu segmentieren und in ein zweites Bild (13) abzubilden, in dem die Segmente (15, 16) voneinander beabstandet und durch Lücken (17) getrennt sind und das in einer zweiten Bildebene liegt,
- nach dem ersten Mikrolinsenarray (8a) eine Phasenmanipulationseinrichtung (9) angeordnet ist, die dazu eingerichtet ist, für jedes Segment (15, 16) in der zweiten Bildebene gemäß einer Punktbildverwaschungsfunktion einen Spot (18, 19) zu erzeugen, dessen Form und/oder Struktur die Tiefenlage im Objekt (3) kodiert und die Lücken (17) im zweiten Bild (13) überdeckt und so ein finales Bild abzubilden,
- der Detektor (10) in der Bildebene des finalen Bildes liegt und Form und/oder Struktur der Spots (18, 19) erfasst und
- die Steuereinrichtung (11) konfiguriert ist, für jedes Segment (15, 16) aus der Form und/oder Struktur des Spots (18, 19) eine laterale Intensitätsverteilung und eine Angabe über die Tiefenlage zu ermitteln und daraus das tiefenaufgelöste Bild des Objektes (3) zu erzeugen.

8. Kamera nach Anspruch 7, **dadurch gekennzeichnet, dass** das zweite Mikrolinsenarray (8b) in einem Abstand vom ersten Mikrolinsenarray (8a) angeordnet ist, der der Summe der Brennweiten der beiden Mikrolinsenarrays (8a, 8b) entspricht, und dem Paar von Mikrolinsenarrays (8a, 8b) eine Relaisoptik (9a, 9b) folgt, die eine Pupillenebene (14) erzeugt, in der eine Phasenmaske (9c) angeordnet ist, so dass die Phasenmanipulationseinrichtung (9) durch die Relaisoptik (9a, 9b) und die Phasenmaske (9c) gebildet ist.

9. Kamera nach Anspruch 7, **dadurch gekennzeichnet, dass** das zweite Mikrolinsenarray (8b) in einem Abstand vom ersten Mikrolinsenarray (8a) angeordnet ist, der der Brennweite der ersten Mikrolinsenarrays (8a) entspricht, und die Phasenmanipulationseinrichtung (9) als mit zweiten Mikrolinsenarray (8b) kombinierte oder dort angeordnete Phasenmaske (9c) ausgebildet ist.

10. Kamera nach einem der Ansprüche 7 bis 9, **dadurch gekennzeichnet, dass** das Phasenmanipulationselement eine auf alle Segmente (15, 16) wirkende Phasenmaske (9c) oder ein Phasenmaskenarray ist, das für einzelne der Segmente (15, 16) individuelle Phasenmaskenelemente aufweist.

11. Kamera nach einem der Ansprüche 7 bis 10, **dadurch gekennzeichnet, dass** ein Zusammenhang zwischen Brennweite f und Abstand p der Zentren der Mikrolinsen des zweiten Mikrolinsenarrays (8b) besteht, der der Beziehung

$$(f/p) = \alpha \, / \, (2 \, NA)$$

genügt, wobei $\alpha$ ein Verhältnis zwischen einer Strahlbündelquerschnittfläche an jeder Mikrolinse des zweiten Mikrolinsenarrays (8b) und einer Fläche der Mikrolinse ist und NA eine numerische Apertur in der ersten Bildebene ist.

12. Mikroskop mit einer Kamera (4) nach einem der Ansprüche 7 bis 11.

13. Mikroskop nach Anspruch 12, **dadurch gekennzeichnet, dass** es einen Abbildungsstrahlengang mit einem Objektiv (5) und einer diesem nachgeordneter eine Tubuslinse (6) und eine nachvergrößernde Optik (7) aufweist, die das erste Bild (12) aufweitet.

## Claims

1. A method for three-dimensional imaging of an object (3), wherein

- the object (3) is imaged along an imaging beam path into a first image (12) lying in a first image plane,
- a first microlens array (8a) is arranged in the first image plane,
- an intensity distribution is captured downstream of the first microlens array (8a) and image data are obtained therefrom and a depth-resolved image of the object (3) is produced from the latter,
- a second microlens array (8b) having the same pitch as the first microlens array (8a) is disposed downstream of the first microlens array (8a),
- the first image (12) is laterally segmented into segments (15, 16) by means of the first and second microlens array (8a, 8b) and is imaged into a second image (13) in which the segments (15, 16) are spaced apart from one another and separated by gaps (17) and which lies in a second image plane,
- a phase manipulation (9c) is carried out downstream of the first microlens array (8a), said phase manipulation producing a spot (18, 19) in the second image plane for each segment (15, 16) according to a point spread function, the form and/or structure of said spot encoding the depth position in the object (3) and covering the gaps (17) in the second image (13) and thereby a final image is imaged,
- the intensity distribution for the final image (13) is captured, the form and/or structure of the spots (18, 19) being resolved, and

- a lateral intensity distribution and a depth specification is ascertained for each segment (15, 16) from the form and/or structure of the spots (18, 19) and the depth-resolved image of the object (3) is produced therefrom.

2. The method as claimed in claim 1, **characterized in that** the object (3) is imaged in the imaging beam path by means of an objective lens (5) and a tube lens (6), the first image (12) additionally being expanded by means of a post-enlarging optical unit (7).

3. The method as claimed in claim 1 or 2, **characterized in that** the second microlens array (8b) is arranged at a distance from the first microlens array (8a) that corresponds to the sum of the focal lengths of the two microlens arrays (8a, 8b), and the second microlens array (8b) is followed by a relay optical unit (9a, 9b), the latter producing a pupil plane (14) in which the phase manipulation is carried out.

4. The method as claimed in claim 1 or 2, **characterized in that** the second microlens array (8b) is arranged at a distance from the first microlens array (8a) that corresponds to the focal length of the first microlens array (8a), and a phase manipulation element (9c) is combined with the second microlens array (8b).

5. The method as claimed in either of claims 1 and 2, **characterized in that** the phase manipulation is carried out using a phase mask (9c) that acts on all segments (15, 16) or using a phase mask array that comprises individual phase mask elements for individual segments (15, 16).

6. The microscopy method as claimed in any one of the preceding claims, **characterized in that** a relationship is observed between the focal length f and the distance p of the centers of the microlenses of the second microlens array (8b), said relationship satisfying the relation

$$(f/p) = \alpha / (2\,NA),$$

where a is a ratio between a beam cross-sectional area at each microlens of the second microlens array (8b) and an area of the microlens, and NA is a numerical aperture in the first image (12).

7. A camera for three-dimensional object imaging using a microscope (1) that images the object (3) into a first image (12) lying in a first image plane, the camera (4) comprising

    - a first microlens array (8a) for arrangement in the first image plane of the microscope (1) or in a further image plane derived therefrom by means of an intermediate optical unit,
    - a detector (10) that produces image data and that is disposed downstream of the first microlens array (8a), and
    - a control device (11) for producing a depth-resolved image of the object (3) from the image data,
    **characterized in that**
    - a second microlens array (8b) having the same pitch as the first microlens array (8a) is arranged between the first microlens array (8a) and the detector (10),
    - the first and second microlens arrays (8a, 8b) are embodied to segment the first image (12) laterally into segments (15, 16) and to image these into a second image (13) in which the segments (15, 16) are spaced apart from one another and separated by gaps (17) and which lies in the second image plane,
    - a phase manipulation device (9) is disposed downstream of the first microlens array (8a), said phase manipulation device being configured for producing a spot (18, 19) in the second image plane for each segment (15, 16) according to a point spread function, the form and/or structure of said spot encoding the depth position in the object (3) and covering the gaps (17) in the second image (13) to thereby image a final image,
    - the detector (10) lies in the image plane of the final image and captures the form and/or structure of the spots (18, 19), and
    - the control device (11) is configured for determining a lateral intensity distribution and a depth position specification for each segment (15, 16) from the form and/or structure of the spot (18, 19) and for producing the depth-resolved image of the object (3) therefrom.

8. The camera as claimed in claim 7, **characterized in that** the second microlens array (8b) is arranged at a distance from the first microlens array (8a) that corresponds to the sum of the focal lengths of the two microlens arrays (8a, 8b), and the pair of microlens arrays (8a, 8b) is followed by a relay optical unit (9a, 9b), the latter producing a pupil plane (14) in which a phase mask (9c) is arranged such that the phase manipulation device (9) is formed by the relay optical unit (9a, 9b) and the phase mask (9c).

9. The camera as claimed in claim 7, **characterized in that** the second microlens array (8b) is arranged at a distance from the first microlens array (8a) that corresponds to the focal length of the first microlens array (8a), and the phase manipulation device (9) is embodied as a phase mask (9c) that is combined with the second microlens array (8b) or arranged there.

10. The camera as claimed in any one of claims 7 to 9, **characterized in that** the phase manipulation element is a phase mask (9c) that acts on all segments (15, 16) or a phase mask array that comprises individual phase mask elements for individual segments (15, 16).

11. The camera as claimed in any one of claims 7 to 10, **characterized in that** there is a relationship between the focal length f and the distance p of the centers of the microlenses of the second microlens array (8b), said relationship satisfying the relation

$$(f/p) = \alpha \,/\, (2 \text{ NA}),$$

where a is a ratio between a beam cross-sectional area at each microlens of the second microlens array (8b) and an area of the microlens, and NA is a numerical aperture in the first image plane.

12. A microscope comprising a camera (4) as claimed in any one of claims 7 to 11.

13. The microscope as claimed in claim 12, **characterized in that** it has an imaging beam path comprising an objective (5) and a tube lens (6) disposed downstream thereof, and a post-enlarging optical unit (7) that expands the first image (12).

**Revendications**

1. Procédé de formation d'image tridimensionnelle d'un objet (3), dans lequel

- l'image de l'objet (3) est formée par un chemin de faisceau de formation d'image en une première image (12) située dans un premier plan image,
- un premier réseau de microlentilles (8a) est disposé dans le premier plan image,
- une distribution d'intensité est détectée en aval du premier réseau de microlentilles (8a) et des données d'image sont obtenues à partir de celle-ci et une image résolue en profondeur de l'objet (3) est générée à partir de celles-ci,
- un deuxième réseau de microlentilles (8b) présentant le même pas que le premier réseau de microlentilles (8a) est disposé en aval du premier réseau de microlentilles (8a), et
- au moyen des premier et deuxième réseaux de microlentilles (8a, 8b), la première image (12) est segmentée latéralement en segments (15, 16) et son image est formée en une deuxième image (13) dans laquelle les segments (15, 16) sont espacés les uns des autres et séparés par des lacunes (17), et qui se situe dans un deuxième plan image,
- en aval du premier réseau de microlentilles (8a), il est procédé à une manipulation de phase (9c) qui génère pour chaque segment (15, 16) dans le deuxième plan image, conformément à une fonction de floutage d'image par points, un point (18, 19) dont la forme et/ou la structure code la position en profondeur dans l'objet (3) et comble les lacunes (17) dans la deuxième image (13), pour ainsi former une image finale,
- la distribution d'intensité de l'image finale (13) est détectée, dans lequel la forme et/ou la structure des points (18, 19) est résolue, et
- pour chaque segment (15, 16), une distribution d'intensité latérale et une information de profondeur sont déterminées à partir de la forme et/ou de la structure des points (18, 19), à partir desquelles est générée l'image de l'objet (3) résolue en profondeur.

2. Procédé selon la revendication 1, **caractérisé en ce que** l'image de l'objet (3) est formée dans le chemin de faisceau de formation d'image au moyen d'un objectif (5) et d'une lentille tubulaire (6), dans lequel la première image (12) est agrandie de manière supplémentaire au moyen d'une optique de post-grossissement (7).

3. Procédé selon la revendication 1 ou 2, **caractérisé en ce que** le deuxième réseau de microlentilles (8b) est disposé à une distance du premier réseau de microlentilles (8a) qui correspond à la somme des distances focales des deux réseaux de microlentilles (8a, 8b), et **en ce que** le deuxième réseau de microlentilles (8b) est suivi d'une optique relais (9a, 9b) qui génère un plan de pupille (14) dans lequel est effectuée la manipulation de phase.

4. Procédé selon la revendication 1 ou 2, **caractérisé en ce que** le deuxième réseau de microlentilles (8b) est disposé à une distance du premier réseau de microlentilles (8a) qui correspond à la distance focale des premiers réseaux de microlentilles (8a), et **en ce qu'**un élément de manipulation de phase (9c) est combiné avec le deuxième réseau de microlentilles (8b).

5. Procédé selon l'une des revendications 1 à 2, **caractérisé en ce que** la manipulation de phase est effectuée à l'aide d'un masque de phase (9c) agissant sur tous les segments (15, 16) ou d'un réseau de masques de phase qui comporte des éléments de masque de phase individuels pour chacun des segments (15, 16).

6. Procédé de microscopie selon l'une des revendications précédentes, **caractérisé en ce qu'**une relation entre la distance focale f et la distance p des centres des microlentilles du deuxième réseau de microlentilles (8b) est respectée, laquelle répond à l'équation

$$(f/p) = \alpha / (2\ NA),$$

où $\alpha$ est un rapport entre la surface de la section transversale du faisceau au niveau de chaque microlentille du deuxième réseau de microlentilles (8b) et une surface de la microlentille, et NA est une ouverture numérique dans la première image (12).

7. Caméra de formation d'image tridimensionnelle d'objets comprenant un microscope (1) qui forme une image de l'objet (3) en une première image (12) située dans un premier plan image, dans laquelle la caméra (4) comporte

- un premier réseau de microlentilles (8a) devant être disposé dans le premier plan image du microscope (1) ou dans un autre plan image dérivé de celui-ci au moyen d'une optique intermédiaire,
- un détecteur (10) disposé en aval du premier réseau de microlentilles (8a) et générant des données d'image, et
- un dispositif de commande (11) destiné à générer une image résolue en profondeur de l'objet (3) à partir des données d'image,
**caractérisé en ce que**
- un deuxième réseau de microlentilles (8b) présentant le même pas que le premier réseau de microlentilles (8a) est disposé entre le premier réseau de microlentilles (8a) et le détecteur (10),
- les premier et deuxième réseaux de microlentilles (8a, 8b) sont conçus pour segmenter latéralement la première image (12) en segments (15, 16) et pour en former l'image en une deuxième image (13) dans laquelle les segments (15, 16) sont espacés les uns des autres et séparés par des lacunes (17), et qui se situe dans un deuxième plan image,
- en aval du premier réseau de microlentilles (8a), il est prévu un dispositif de manipulation de phase (9) qui est conçu pour générer pour chaque segment (15, 16) dans le deuxième plan image, conformément à une fonction de floutage d'image par points, un point (18, 19) dont la forme et/ou la structure code la position en profondeur dans l'objet (3) et comble les lacunes (17) dans la deuxième image (13), pour ainsi former une image finale,
- le détecteur (10) est situé dans le plan image de l'image finale et détecte la forme et/ou la structure des points (18, 19), et
- le dispositif de commande (11) est configuré pour déterminer pour chaque segment (15, 16), à partir de la forme et/ou de la structure du point (18, 19), une distribution d'intensité latérale et une information concernant la position en profondeur et pour générer à partir de celles-ci l'image résolue en profondeur de l'objet (3).

8. Caméra selon la revendication 7, **caractérisée en ce que** le deuxième réseau de microlentilles (8b) est disposé à une distance du premier réseau de microlentilles (8a) qui correspond à la somme des longueurs focales des deux réseaux de microlentilles (8a, 8b), et **en ce que** la paire de réseaux de microlentilles (8a, 8b) est suivi d'une optique relais (9a, 9b) qui génère un plan de pupille (14) dans lequel est disposé un masque de phase (9c), de manière à ce que le dispositif de manipulation de phase (9) soit formé par l'optique relais (9a, 9b) et le masque de phase (9c).

**9.** Caméra selon la revendication 7, **caractérisée en ce que** le deuxième réseau de microlentilles (8b) est disposé à une distance du premier réseau de microlentilles (8a) qui correspond à la longueur focale des premiers réseaux de microlentilles (8a), et **en ce que** le dispositif de manipulation de phase (9) est réalisé sous la forme d'un masque de phase (9c) combiné avec le deuxième réseau de microlentilles (8b) ou disposé au niveau de celui-ci.

**10.** Caméra selon l'une des revendications 7 à 9, **caractérisée en ce que** l'élément de manipulation de phase est un masque de phase (9c) agissant sur tous les segments (15, 16) ou un réseau de masques de phase qui comporte des éléments de masque de phase individuels pour chacun des segments (15, 16).

**11.** Caméra selon l'une des revendications 7 à 10, **caractérisée en ce qu'**une relation entre la longueur focale f et la distance p des centres des microlentilles du deuxième réseau de microlentilles (8b) est respectée, laquelle répond à l'équation

$$(f/p) = \alpha / (2\ NA),$$

où $\alpha$ est un rapport entre la surface de la section transversale du faisceau au niveau de chaque microlentille du deuxième réseau de microlentilles (8b) et une surface de la microlentille, et NA est une ouverture numérique dans le premier plan image.

**12.** Microscope comprenant une caméra (4) selon l'une des revendications 7 à 11.

**13.** Microscope selon la revendication 12, **caractérisé en ce qu'**il comporte un chemin de faisceau de formation d'image doté d'un objectif (5) et d'une lentille tubulaire (6) disposée en aval de celui-ci, et une optique de post-grossissement (7) qui agrandit la première image (12).

**FIG. 1**

**FIG. 3**

FIG. 2

FIG. 4

FIG. 5

EP 3 593 190 B1

# FIG. 6

# FIG. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7433042 B1
- US 20140263963 A1
- US 20160091706 A1
- US 20160062100 A1
- WO 2012039636 A
- DE 102012224306 A1

**In der Beschreibung aufgeführte Nicht-Patentliteratur**

- **M. BROXTON et al.** *Optics Express,* vol. 21 (21), 25418-25439
- **N. COHEN et al.** *Optics Express,* vol. 22 (20), 24817-24839
- **R. BERLICH et al.** *Optics Express,* vol. 24 (6), 5946-5960
- **N. HAGEN ; M. KUDENOV.** *Optical Engineering,* September 2013, vol. 52 (9), 090901-1, 090901-23